(19) Europäisches Patentamt
European Patent Office
Office européen des brevets

(11) **EP 1 953 979 A1**

(12) **EUROPÄISCHE PATENTANMELDUNG**

(43) Veröffentlichungstag:
06.08.2008 Patentblatt 2008/32

(51) Int Cl.:
*H04L 27/26* (2006.01)

(21) Anmeldenummer: 07002016.9

(22) Anmeldetag: 30.01.2007

(84) Benannte Vertragsstaaten:
AT BE BG CH CY CZ DE DK EE ES FI FR GB GR HU IE IS IT LI LT LU LV MC NL PL PT RO SE SI SK TR
Benannte Erstreckungsstaaten:
AL BA HR MK RS

(71) Anmelder: Nokia Siemens Networks GmbH & Co. KG
81541 München (DE)

(72) Erfinder:
• Baumgartner, Bernd
  89537 Giengen-Burgberg (DE)
• Jelonnek, Björn, Dr.
  89079 Ulm (DE)
• Splett, Armin, Dr.
  89079 Ulm (DE)
• Wolff, Gunter, Dr.
  89081 Ulm (DE)

(54) **Verfahren und Vorrichtung zum Senden eines Sendesignals, insbesondere eines Mobilfunksignals**

(57) Die Erfindung betrifft ein Verfahren zum Senden eines Sendesignals, insbesondere eines Mobilfunksignals, an einen Empfänger, bei dem

das Sendesignal gemäß einem Modulations-Codierungs-Schema MCS verarbeitet und einer Amplitudenbegrenzung zum Erzielen eines vorgegebenen Verhältnisses von maximaler zu mittlerer Sendeleistung PAR unterzogen wird, und bei dem

ein Grenzwert EVM für einen Fehler des Sendesignals bedarfsgerecht an Übertragungsbedingungen für das Sendesignal derart angepasst wird, dass ein maximaler Nutzsignal-Stör-Abstand (C/I) an einem Empfänger erzielt wird.

FIG 7

Printed by Jouve, 75001 PARIS (FR)

**Beschreibung**

Die Erfindung betrifft ein Verfahren zum Senden eines Sendesignals, insbesondere eines Mobilfunksignals, an einen Empfänger gemäß Anspruch 1 und eine entsprechende Vorrichtung gemäß Anspruch 6.

In modernen Mobilfunkstandards werden höherwertige Modulationsverfahren, wie beispielsweise QPSK (Quadrature Phase Shift Keying), 8PSK (Phase Shift Keying) oder 16QAM (Quadrature Amplitude Modulation) verwendet. Bei diesen Modulationsverfahren werden Symbole mit mehr als zwei möglichen Informationszuständen übertragen. Hierbei wird auf die Konstanz der momentanen Sendeleistung zugunsten höherer Datenübertragungsraten verzichtet.

Eine noch stärkere Variation der momentanen Sendeleistung wird durch den Einsatz von Mehrfachträgersystemen hervorgerufen. Bei Mehrfachträgersystemen, wie beispielsweise OFDM-(Orthogonal Frequency Division Multiplexing) und OFDMA- (Orthogonal Frequency Division Multiple Access) basierten Mobilfunkstandards oder Multi-Carrier-GSM (Global System for Mobile Communication), werden mehrere modulierte Einzelträger zu einem Gesamtsignal zusammengefasst.

Je nach Modulationsverfahren und Kombination der Einzelträger kann daher bei den Mehrfachträgersystemen die maximale augenblickliche Leistung eines Sendesignals wesentlich über dem Mittelwert der Sendeleistung liegen. Das Verhältnis von maximaler zu mittlerer Sendeleistung wird als Peak to Average Ratio (PAR) oder Peak to Average Power Ratio (PAPR) bezeichnet (PAR > 1 und PAPR > 1).

Bei höherem PAR muss der Sendeverstärker eines Sendesystems beträchtliche Aussteuerreserven vorhalten, um nichtlineare Verzerrungen des Sendesignals beispielsweise aufgrund von Begrenzungs (Clipping)-Effekten zu vermeiden. Dadurch erhöhen sich die Komplexität und der Leistungsverbrauch des Verstärkers; zudem verringert sich der Wirkungsgrad des Gesamtsystems. Das begrenzt wiederum die verfügbare Sendeleistung und Reichweite der Sendeeinrichtung.

Zur Reduktion der Spitzenleistung können Verfahren eingesetzt werden, bei denen die Amplitude von Signalspitzen begrenzt wird (Clipping). Hierdurch wird dem Signal ein Fehler hinzugefügt, der umso größer ist, je stärker die Spitzenleistung reduziert wird. Solche Reduktionsverfahren können durch intelligente Übertragungsmodi unterstützt werden, in denen gezielt Übertragungskapazität so freigehalten oder mit nicht nutzbaren Signalen belegt wird, dass das PAR sinkt.

Um die Anforderungen an den Sendeverstärker zu begrenzen, ist aus der DE 102 19 318 A1 ein Verfahren zur Bildung eines trägerfrequenten Ausgangssignals aus n Teilsignalen eines Basisfrequenzbands bekannt, bei dem jedes einzelne der n Teilsignale jeweils einem Hauptzweig als Eingangssignal zugeordnet und amplitudenbegrenzt, gefiltert und in ein zwischenfrequentes Teilsignal umgewandelt wird. Die zwischenfrequenten n Teilsignale werden als Ausgangssignale der Hauptzweige zu einem gemeinsamen Summensignal zusammengefasst. Das Summensignal wird amplitudenbegrenzt, digital-analog gewandelt und in das trägerfrequente Ausgangssignal umgesetzt. Zusätzlich gelangt jedes Teilsignal in einen Nebenzweig, mit dessen Hilfe zu erwartende Signalüberhöhungen des Teilsignals im entsprechenden Hauptzweig als Schätzwerte ermittelt werden. Mit Hilfe der Schätzwerte werden im Hauptzweig die dort jeweils durchgeführten Amplitudenbegrenzungen der entsprechenden Teilsignale gesteuert.

Eine Aufgabe der vorliegenden Erfindung ist es nun, ein Verfahren und eine Vorrichtung zum Senden eines Sendesignals, insbesondere eines Mobilfunksignals, an einen Empfänger vorzuschlagen, deren Datendurchsatz und Reichweite erhöht sein kann.

Diese Aufgabe wird durch ein Verfahren zum Senden eines Sendesignals, insbesondere eines Mobilfunksignals, gemäß Anspruch 1 und eine entsprechende Vorrichtung gemäß Anspruch 6 gelöst. Weitere Ausgestaltungen der Erfindung ergeben sich aus den abhängigen Ansprüchen.

Ein wesentlicher Gedanke der Erfindung besteht darin, dass die verfügbare Sendeleistung vergrößert werden kann, wenn das PAR des Sendesignals durch Clipping verringert wird. Einerseits reduziert eine höhere Sendeleistung den Einfluss einer Rausch- und Störleistungen auf der Empfängerseite, andererseits vergrößert Clipping die Signalfehlerleistung vom Sender. Beide Effekte haben einen gegensätzlich wirkenden Einfluss auf das Gesamt-C/I (Carrier-to-Interference; Nutzsignal-Stör-Abstand) auf der Empfängerseite. Die Erfindung schlägt nun vor, diese Tatsache für eine Optimierung zu nutzen, insbesondere für eine bedarfsgerechte Anpassung eines Grenzwerts (EVM) für einen Fehler des Sendesignals an Übertragungsbedingungen für das Sendesignal. Der Grenzwert ist also nach der Erfindung nicht fest vorgegeben, sondern kann flexibel, entsprechend den aktuellen Übertragungsdingungen oder -anforderungen ermittelt und angepasst werden. Die Übertragungsbedingungen, insbesondere Funkbedingungen können mittels Übertragungsfaktoren, wie beispielsweise Priorität eines Kanals, Auslastung einer Funkzelle, Empfangsbedingungen oder garantierte minimale Datenraten charakterisiert werden. Diese Bedingungen können sich während des Betriebes der Vorrichtung zum Senden fortlaufend ändern. Mit Hilfe eines optimal angepassten EVM bzw. des daraus resultierenden Verhältnis von maximaler zu mittlerer Sendeleistung (PAR) kann die Sendeleistung in einem größeren Umfang variiert werden. Dadurch können unvermeidbare Störungen gezielter verteilt und vermeidbare Störungen verringert werden. Außerdem lassen sich, sofern stärkere Störungen möglich sind, höhere Reichweiten oder Datenraten erzielen und, sofern bereits ohne Probleme hohe Datenraten erzielt werden können, geringere Störungen erreichen. Auch kann das Sendesignal so angepasst werden, dass ein Signal-Rausch-Abstand des Sendesignals an einem Empfänger, der das Sendesignal empfängt, optimiert ist.

Der erfindungsgemäße Ansatz ermöglicht den Einsatz leistungsärmerer und damit kostengünstigerer Verstärker im Sender. Trotz des Einsatzes solcher Verstärker lässt sich, im Vergleich zu bekannten Systemen, die gleiche mittlere Ausgangsleistung ohne störende Einbußen der Signalqualität erzielen.

Bei dem von der erfindungsgemäßen Vorrichtung bereitgestellten Sendesignal kann es sich um ein Sendesignal eines Mehrfachträgersystems handeln, in dem höherwertige Modulationsverfahren, wie beispielsweise QPSK, 8PSK oder 16QAM mit mehr als zwei möglichen Informationszuständen pro Sendesymbol verwendet werden. Das Sendesignal kann eine Mehrzahl von Unterträgern aufweisen. Signale der Unterträger können separat voneinander in ihrer Sendeleistung geregelt und begrenzt werden. Begrenzung eines Signals im Sinne der vorliegenden Erfindung bedeutet, dass Spitzenwerte des Signals und somit das Verhältnis von maximaler zu mittlerer Sendeleistung des Signals reduziert werden. Das reduzierte Signal entspricht somit dem ursprünglichen Signal, kann jedoch in der Amplitude und in der Sendeleistung reduziert sein.

Gemäß einer Ausführungsform der Erfindung ist ein Verfahren zum Senden eines Sendesignals, insbesondere eines Mobilfunksignals, an einen Empfänger, bei dem

das Sendesignal gemäß einem Modulations-Codierungs-Schema MCS verarbeitet und einer Amplitudenbegrenzung zum Erzielen eines vorgegebenen Verhältnisses von maximaler zu mittlerer Sendeleistung PAR unterzogen wird, und bei dem

ein Grenzwert EVM für einen Fehler des Sendesignals bedarfsgerecht an Übertragungsbedingungen für das Sendesignal derart angepasst wird, dass ein maximaler Nutzsignal-Stör-Abstand C/I an einem Empfänger erzielt wird.

Gemäß einer weiteren Ausführungsform der Erfindung kann eine Übertragungsbedingung eine minimale Sendeleistung bei fest vorgegebenem Nutzsignal-Stör-Abstand (C/I) an einem Empfänger sein, und der Grenzwert EVM für einen Fehler des Sendesignals auf nahezu Null eingestellt werden.

Gemäß einer weiteren Ausführungsform der Erfindung kann eine Übertragungsbedingung ein zu maximierender Nutzsignal-Stör-Abstand C/I am Empfänger bei einem fest vorgegebenem Spitzenwert-Rausch-Abstand PNR sein und der optimale Grenzwert für einen Fehler des Sendesignals EVM wie folgt ermittelt werden:

a) Ermitteln der Abhängigkeit des Fehlers des Sendesignals EVM vom vorgegebenen Verhältnis von maximaler zu mittlerer Sendeleistung PAR beim Sender,

b) Bestimmen des maximalen Nutzsignal-Stör-Abstands C/I am Empfänger und des dazugehörigen Fehlers des Sendesignals $EVM^2$ für einen beliebigen, festen Wert des Spitzenwert-Rausch-Abstands $PNR_{RX}$ am Empfänger,

c) Zuordnen des aus der Optimierung in b) erhaltenen Fehlers des Sendesignals $EVM^2$ als Grenzwert zum maximalen Nutzsignal-Stör-Abstand C/I am Empfänger , und

d) Wiederholen der Schritte b) und c) für verschiedene Werte des Spitzenwert-Rausch-Abstands $PNR_{RX}$.

Gemäß einer weiteren Ausführungsform der Erfindung wird die Auslastung einer Funkzelle mit einem Parameter Load L=0%...100% abgeschätzt, um entsprechende Maßnahmen für eine Zugangssteuerung (Admission Control), eine Überlaststeuerung (Congestion Control) oder eine Ablaufsteuerung (Scheduling) zu entscheiden, und der Parameter Load kann verwendet werden, um den Grenzwert für einen Fehler $EVM_{TX}$ des Senders vorzugeben.

Gemäß einer weiteren Ausführungsform der Erfindung kann der Grenzwert für einen Fehler $EVM_{TX}$ des Senders sich gemäß der Formel

$$EVM_{TX} = EVM_{TX,0} + (EVM_{TX,100} - EVM_{TX,0}) \times (L / 100\%),$$

ergeben, wobei $EVM_{TX,0}$ und $EVM_{TX,100}$ für den zulässigen Grenzwert für einen Fehler EVM bei minimaler Last beziehungsweise maximaler Last stehen.

Eine weitere Ausführungsform der Erfindung betrifft eine Vorrichtung zum Senden eines Sendesignals an einen Empfänger, umfassend

- einen Leistungsregler zum Regeln einer Sendeleistung eines Zwischenfrequenzsignals abhängig von einem Leistungsparameter;
- einen Begrenzer zum Begrenzen der Sendeleistung des Zwischenfrequenzsignals abhängig von einem Begrenzungsparameter, wobei aus dem Zwischenfrequenzsignal das Sendesignal erzeugbar ist;
- eine Überwachungseinheit, die ausgebildet ist, um gemäß einer Optimierungsvorschrift einen Grenzwert für einen Fehler des Sendesignals abhängig von Übertragungsfaktoren zu bestimmen und aus dem Grenzwert zumindest den Leistungsparameter so zu bestimmen, dass das Sendesignal an den Grenzwert angepasst ist.

Gemäß einer Ausführungsform der Erfindung kann die Überwachungseinheit ausgebildet sein, um neben dem Leistungsparameter auch den Begrenzungsparameter so zu bestimmen, dass das Sendesignal an den Grenzwert angepasst ist. Indem sowohl die Regelung der Sendeleistung als auch die Begrenzung der Sendeleistung des Sendesignals abhängig von dem Grenzwert erfolgt, kann das Sendesignal noch exakter an die jeweiligen Übertragungskanäle, insbesondere Funkverbindungen mit ihren entsprechenden Übertragungsfaktoren angepasst werden.

Gemäß einer weiteren Ausführungsform der Erfindung kann die Vorrichtung zum Senden ferner einen Modulator aufweisen, der ausgebildet ist, um ein Basisbandsignal abhängig von einem Modulationsparameter zu modulieren und als das Zwischenfrequenzsignal bereitzustellen, wobei die Überwachungseinheit ferner ausgebildet ist, um den Modulationsparameter aus dem Grenzwert zu bestimmen. Neben der Modulation kann eine Codierung durchgeführt werden. Eine Steuerung der Modulation und Codierung des Sendesignals abhängig von dem Grenzwert bietet eine weitere Möglichkeit das Sendesignal an den jeweiligen Übertragungskanal, insbesondere die jeweilige Funkverbindung anzupassen.

Die Vorrichtung kann ferner einen Digital-Analog-Wandler, einen Aufwärtsmischer und einen Sendeverstärker aufweisen, um das Sendesignal aus dem Zwischenfrequenzsignal zu erzeugen.

Die Optimierungsvorschrift kann darauf basieren, dass sich eine relative Fehlerenergie an dem Empfänger aus der Formel

$$1/(C/I)_{min} > 1/(C/I) = 1/SNR_{RX} + EVM_{TX}^{2}$$

ergibt und dass $SNR_{RX}$ der Signal-Rausch-Abstand am Empfänger für Fehler, die nicht von der Vorrichtung zum Senden stammen, direkt mit einer mittleren Sendeleistung des Sendesignals skaliert. Dabei ist $(C/I)_{min}$ der mindestens erforderliche Nutzsignal-Stör-Abstand, $SNR_{RX}$ der Signal-Rausch-Abstand am Empfänger und $EVM_{TX}$ der Fehlergrenzwert in der Vorrichtung zum Senden. Durch die Anpassung dieses Fehlergrenzwertes lässt sich der Signal-Rausch-Abstand des Sendesignals am Empfänger optimieren.

Gemäß einer Ausführungsform kann die mittlere Sendeleistung des Sendesignals einer der Übertragungsfaktoren sein und die Optimierungsvorschrift kann eine Reduzierung des Grenzwerts bei einer Reduzierung der mittleren Sendeleistung und eine Erhöhung des Grenzwerts bei einer Erhöhung der mittleren Sendeleistung bewirken.

Gemäß der Optimierungsvorschrift kann der Grenzwert zum Erreichen einer minimalen Sendeleistung des Sendesignals bei einem vorgegebenen Nutzsignal-Stör-Abstand gemäß der Formeln

$$EVM_{TX} = EVM_{Analog},$$

und

$$1/(C/I) = 1/SNR_{RX} + EVM_{Analog}^{2}$$

bestimmbar sein. Dabei ist $EVM_{Analog}$ der Grenzwert in einem Analogteil der Vorrichtung zum Senden.

Gemäß einer weiteren Ausführungsform kann der Grenzwert gemäß der Optimierungsvorschrift zum Erreichen eines maximalen Nutzsignal-Stör-Abstands bei einem vorgegebenen Spitzen-Rausch-Abstand gemäß der Formel

$$1/(C/I) = 1/SNR_{RX} + EVM^{2} = PAR_{TX}/PNR_{RX} + EVM_{TX}^{2}$$

bestimmbar sein. Dabei ist $PAR_{TX}$ das Verhältnis von maximaler zu mittlerer Sendeleistung und $PNR_{RX}$ der Spitzen-Rausch-Abstand der Signalleistung am Empfänger.

Gemäß einer weiteren Ausführungsform kann die Überwachungseinheit zum Bestimmen einer Abhängigkeit des Quadrats des Grenzwertes $EVM^{2}$ von einem erforderlichen Nutzsignal-Stör-Abstand C/I ausgebildet sein, um in einem ersten Schritt eine Abhängigkeit des Quadrats des Grenzwertes von einem Verhältnis von maximaler zu mittlerer Sendeleistung $EVM^{2}(PAR)$ bei der Vorrichtung zum Senden zu ermitteln, in einem zweiten Schritt einen maximalen Nutzsignal-Stör-Abstand C/I für einen vorgegebenen Spitzen-Rausch-Abstand-Wert am Empfänger ($PNR_{RX}$-Wert) zu bestimmen, in einem dritten Schritt das Quadrat des Grenzwertes zum Signal-Rausch-Abstand aus der Bestimmung im zweiten Schritt zuzuordnen und in einem vierten Schritt den zweiten und dritten Schritt für verschiedene Spitzen-Rausch-Abstand-Werte am Empfänger zu wiederholen. Eine solche Optimierung ist dann zweckmäßig, wenn bei schlechten Empfangsbedingungen oder Diensten hoher Priorität die Sendeleistung erhöht werden soll.

Die Überwachungseinheit kann mit einem Speicher koppelbar sein, wobei der Speicher einen Zusammenhang zwischen dem Verhältnis von maximaler zu mittlere Sendeleistung PAR und dem Grenzwert für den maximal zulässigen Fehler des Sendesignals EVM sowie Werte für einen zugehörigen maximalen Signal-Rausch-Abstand aufweisen kann. Ferner kann der Speicher Begrenzungsparameter zum Bereitstellen an den Begrenzer aufweisen.

Ferner kann die Vorrichtung eine Verwaltungseinheit zur Abschätzung einer Auslastung einer Funkzelle, in der die Vorrichtung zum Senden angeordnet ist, aufweisen, wobei die Auslastung ein Übertragungsfaktor ist und die Verwaltungseinheit ausgebildet ist, um die Auslastung and die Überwachungseinheit bereitzustellen. Dementsprechend kann der Grenzwert unter Einbeziehung der Formel

$$\mathrm{EVM_{TX}} = \mathrm{EVM_{TX,0}} + (\mathrm{EVM_{TX,100}} - \mathrm{EVM_{TX,0}}) \times (L / 100\%),$$

bestimmbar sein. Dabei ist $\mathrm{EVM_{TX,0}}$ der zulässiger Grenzwert bei minimaler Last, $\mathrm{EVM_{TX,100}}$ der zulässige Grenzwert bei maximaler Last und L die Auslastung der Funkzelle. Auf diese Weise lässt sich der Grenzwert schnell an wechselnde Funkbedingungen anpassen.

Gemäß einer Ausführungsform kann der Modulator ausgebildet sein, um eine Mehrzahl von Basisbandsignalen abhängig von einer Mehrzahl von Modulationsparametern zu modulieren und als eine Mehrzahl von Zwischenfrequenzsignalen bereitzustellen. Ferner kann die Überwachungseinheit ausgebildet sein, um die Mehrzahl von Modulationsparametern aus dem Grenzwert zu bestimmen. Die Vorrichtung kann einen Kombinierer aufweisen, der ausgebildet ist, um die Mehrzahl von Zwischenfrequenzsignalen zu kombinieren und als Zwischenfrequenzsignal an den Leistungsregler bereitzustellen. Dies ist vorteilhaft bei einer Verwendung der Vorrichtung zum Senden in einem Mehrfachträgersystem, bei dem mehrere modulierte Einzelträger zu einem Gesamtsignal zusammengefasst werden.

Gemäß einer weiteren Ausführungsform kann die Vorrichtung zum Senden eine Mehrzahl von Leistungsreglern zum Regeln jeweils einer Sendeleistung der Mehrzahl von Zwischenfrequenzsignalen abhängig von einer Mehrzahl von Leistungsparametern aufweisen. Ferner kann die Überwachungseinheit ausgebildet sein, um aus dem Grenzwert die Mehrzahl von Leistungsparametern zu bestimmen. Dadurch lassen sich einzelne Teilsignale des Sendesignals individuell an die Übertragungsbedingungen, insbesondere Funkbedingungen anpassen.

Gemäß einer alternativen Ausführungsform der Erfindung kann die Vorrichtung einen Kombinierer aufweisen, der ausgebildet ist, um die Mehrzahl von Zwischenfrequenzsignalen zu kombinieren und als Zwischenfrequenzsignal an den Begrenzer bereitzustellen. Der Begrenzer kann den Begrenzungsparameter bereits aufweisen. In diesem Fall ist es nicht erforderlich, dass die Überwachungseinheit den Begrenzungsparameter bereitstellt. Ferner kann der Begrenzer ausgebildet sein, um jeweils eine Sendeleistung der Mehrzahl von Zwischenfrequenzsignalen abhängig von einer Mehrzahl von Begrenzungsparametern zu begrenzen und eine Mehrzahl von Sendesignalen bereitzustellen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1    ein Diagramm mit Simulationsergebnissen verschiedener C/I(EVM)-Kurven bei einem angenommen $\mathrm{EVM_{anal}}$ von 2%;

Fig. 2    ein Diagramm mit Simulationsergebnissen verschiedener C/I(EVM)-Kurven bei einem angenommen $\mathrm{EVM_{anal}}$ von 3,5%;

Fig. 3    ein Blockschaltbild einer Vorrichtung gemäß einem Ausführungsbeispiel der Erfindung;

Fig. 4    ein Blockschaltbild einer Vorrichtung gemäß einem weiteren Ausführungsbeispiel der Erfindung;

Fig. 5    ein Blockschaltbild einer Vorrichtung gemäß einem weiteren Ausführungsbeispiel der Erfindung;

Fig. 6    ein Blockschaltbild einer Vorrichtung gemäß einem weiteren Ausführungsbeispiel der Erfindung;

Fig. 7    ein erstes Flussdiagramm der Einstellung von Parametern einer Mobilfunk-Sendeeinrichtung mit einer Optimierung gemäß der Erfindung;

Fig. 8    ein zweites Flussdiagramm der Einstellung von Parametern einer Mobilfunk-Sendeeinrichtung mit einer Optimierung gemäß der Erfindung; und

Fig. 9    ein Flussdiagramm der Einstellung von Parametern einer Mobilfunk-Sendeeinrichtung gemäß dem Stand der Technik.

Im Folgenden können gleiche und/oder funktional gleiche Elemente mit dem gleichen Bezugszeichen versehen sein. Absolute Größenangaben sind nur beispielhafte Angaben und sind nicht als einschränkend für die Erfindung auszulegen. Die in der folgenden Beschreibng bei einigen Angaben verwendeten Indizes RX und TX bedeuten Sender- bzw- Empfänger-seitig.

Bei Übertragungsverfahren der Nachrichtentechnik kann insbesondere im jeweiligen Mobilfunkstandard in Abhängigkeit des verwendeten Modulations-und-Codierungs-Schemas (MCS) ein Grenzwert für einen maximal zulässigen Fehler des Sendesignals (EVM: error vector magnitude bzw. RCE: relative constellation error) angegeben werden. Dieser Grenzwert basiert auf einem mindestens erforderlichen Nutzsignal-Stör-Abstand $(C/I)_{min}$ für den Empfang eines Signals mit dem verwendeten MCS und berücksichtigt zusätzlich eine gewisse Marge M für beispielsweise durch Rauschen oder Interferenz hervorgerufene Fehler, die nicht vom Sender stammen. Diese Marge M kann ein fester Betrag, beispielsweise ein Faktor 10 sein (entspricht 10 dB), und der maximal zulässige Fehler des Sendesignals kann gemäß den folgenden Formeln ermittelt werden:

$$EVM^2 = 1/((C/I)_{min} \cdot M) \text{ bzw. } RCE = 1/((C/I)_{min} \cdot M).$$

Alternativ kann die Marge auch eine gewisse Randbedingung enthalten. Eine solche Randbedingung kann beispielsweise darin bestehen, dass sich der theoretisch zu erwartende (fehlerfreie bzw. fehlerkorrigierte) Datendurchsatz bei einem bestimmten Nutzsignal-Stör-Abstand C/I durch Auftreten von EVM bzw. RCE nur um höchstens 5% verschlechtern soll.

$$EVM^2 = 1/(C/I)_{95\%} - 1/(C/I)_{100\%}.$$

Dabei entsprechen $(C/I)_{100\%}$ dem 100%-igen Datendurchsatz und $(C/I)_{95\%}$ den um 5% verschlechterten. In den obigen Formeln handelt es sich um eine lineare Leistung (nicht in dB).

Am Empfänger des Sendesignals ergibt sich folgende relative Fehlerenergie:

$$1/(C/I)_{min} > 1/(C/I) = 1/SNR_{RX} + EVM_{TX}^2$$

Für Fehler, die nicht vom Sender stammen, skaliert $SNR_{RX}$ direkt mit der Sendeleistung. Mit anderen Worten erzeugt ein "lautes" Sendesignal, beispielsweise ein mit hoher Sendeleistung ausgesandtes Mobilfunksignal ein größeres $SNR_{RX}$ als ein "leises" Sendesignal, beispielsweise ein mit niedriger Sendeleistung ausgesandtes Mobilfunksignal. Ferner ist die maximal mögliche (mittlere) Sendeleistung umgekehrt proportional zum PAR, d.h. ein großes PAR bedeutet eine relativ geringe (mittlere) Sendeleistung, da hohe Peaks im Sendesignal auftreten, wogegen ein kleines PAR nahe 1 eine hohe (mittlere) Sendeleistung ermöglicht, da nur kleine Peaks im Sendesignal auftreten. Schließlich kann ein möglichst kleines PAR erzielt werden, wenn EVM bzw. RCE im Sendesignal möglichst hoch sein darf.

Dies wird nun nach der Erfindung ausgenutzt, um das SNR bzw. C/I (Carrier to Interference), das für ein bestimmtes MCS erforderlich ist, auf der Empfängerseite zu optimieren. Hierbei werden die unterschiedlichen Beiträge berücksichtigt, aus denen sich $EVM_{TX}^2$ auf der Empfängerseite zusammensetzt (anstelle von $EVM^2$ kann auch RCE stehen):

$$EVM_{TX}{}^2 = EVM_{Clip}{}^2 + EVM_{Analog}{}^2$$

Während der aufgrund des analogen Senderverstärkers erzeugte Fehler $EVM_{Analog}$ näherungsweise als Konstante betrachtet werden kann, ergibt sich der durch das Clipping erzeugte Fehler $EVM_{clip}$ direkt aus der Begrenzung des Sendesignals und hängt vom erzielten PAR ab.

Gemäß der Erfindung können nun die EVM - Werte den jeweiligen Funkverbindungen bedarfsgerecht angepasst werden. Bei guten Empfangsbedingungen oder Diensten niedriger Priorität genügt eine niedrige Sendeleistung, die andere Funkverbindungen weniger stört. Hier wird der Spielraum für ein hohes PAR und damit niedriges EVM ausgenutzt, den diese niedrige Sendeleistung bietet, damit sich das C/I verbessert.

Erster Optimierungsansatz

Daher ist ein erster Optimierungsansatz darauf ausgelegt, eine minimale Sendeleistung bei einem festem C/I zu erreichen. Dieser Ansatz hat zur Folge, dass $1/SNR_{RX}$ groß wird. Somit bleibt bei einem festen $1/(C/I)$ fast kein Spielraum mehr für $EVM_{TX}{}^2$. Dies führt zu einem großen PAR. Im Grenzfall gilt:

$$EVM_{TX} = EVM_{Analog}$$

und

$$1/(C/I) = 1/SNR_{RX} + EVM_{Analog}{}^2$$

Der erste Optimierungsansatz ist dann zweckmäßig, wenn die betreffende Funkverbindung andere Funkverbindungen minimal stören soll. Dies ist beispielsweise möglich, wenn aufgrund guter Empfangsbedingungen die Sendeleistung abgesenkt werden kann.

Zweiter Optimierungsansatz

Bei schlechten Empfangsbedingungen oder Diensten hoher Priorität kann die Sendeleistung, bei gegebener Spitzenleistung, erhöht werden. Bei einem fest vorgegebenen Spitzenwert-zu-Rausch-Verhältnis (PNR: peak to noise ratio) der Leistung am Empfänger kann das EVM auf minimales $1/(C/I)$ optimiert werden.

Daher ist ein zweiter Optimierungsansatz darauf ausgelegt, dass $1/(C/I)$ bei festem PNR minimal werden soll. Die Formel für den zweiten Optimierungsansatz ergibt sich aus

$$1/(C/I) = 1/SNR_{RX} + EVM^2 = PAR_{TX}/PNR_{RX} + EVM_{TX}{}^2$$

Der zweite Optimierungsansatz basiert auf einem Verfahren, bei dem die folgenden Schritte durchgeführt werden:

a) Ermitteln der Abhängigkeit $EVM^2(PAR)$ beim Sender

b) Optimierung: Bestimmung des minimalen $1/(C/I)$ für einen beliebigen, festen $PNR_{RX}$ -Wert

c) Zuordnung des $EVM^2$ zum C/I aus der Optimierung in b)

d) Wiederholung der Schritte b) und c) für verschiedene $PNR_{RX}$ -Werte

Mit diesem Verfahren lässt sich die Abhängigkeit des $EVM^2$ von dem erforderlichen C/I ermitteln, wobei auf minimales 1/(C/I) für eine Funkverbindung optimiert ist. Entsprechende Einrichtungen zum Durchführen des Verfahrens können in der Überwachungseinrichtung zur Bestimmung des Grenzwertes hardwaremäßig oder softwaremäßig realisiert sein.

Die Erhöhung der Sendeleistung führt zu einem kleineren PAR und somit größerem EVM und ermöglicht bis zum, im zweiten Optimierungsansatz bestimmten EVM - Grenzwert, eine Verbesserung des C/I. Ein noch größerer EVM - Wert als der im zweiten Optimierungsansatz bestimmte Grenzwert kann zu einer Verschlechterung des C/I führen.

Nach Durchführung eines der Optimierungsverfahren kann eine bedarfsgerechte Anpassung jeder Funkverbindung durch eine entsprechende Wichtung der $EVM_{Clip}$ - Werte, die aus dem ersten oder zweiten Optilflierungsverfahren bestimmt wurden, erfolgen. Aus dem EVM Wert oder den EVM - Werten können über die Leistungsparameter die mittlere Sendeleistung und über die Begrenzurigsparameter die Begrenzung des Sendesignals bestimmt werden.

Dritter Optimierungsansatz

Zusätzlich kann in eine Wichtung der $EVM_{clip}$- Werte die Auslastung der Funkzelle einfließen. Dies kann mittels einem dritten Optimierungsansatz erfolgen. Alternativ kann der dritte Optimierungsansatz auch eigenständig und für das gesamte Sendesignal vorgenommen werden. Gemäß dem dritten Optimierungsansatz werden die Radio Ressourcen einer Funkzelle in einer zentralen Einheit des Radio-Zugriff-Systems (Radio Access Systems) verwaltet. Bei den Radio Ressourcen kann es sich z.B. um eine Steuerung (Scheduler) oder um eine Radio Ressourcen Verwaltung (Radio Resource Management) handeln. Die zentrale Einheit schätzt üblicherweise die Auslastung der Funkzelle mit einem Parameter Load (L=0%...100%) ab, um entsprechende Maßnahmen für eine Zugangssteuerung (Admission Control), eine Überlaststeuerung (Congestion Control) oder eine Ablaufsteuerung (Scheduling) zu entscheiden.

Erfindungsgemäß kann der Parameter L nun zusätzlich verwendet werden, um das $EVM_{TX}$ des Senders vorzugeben. Ein einfacher Algorithmus dafür ist zum Beispiel

$$EVM_{TX} = EVM_{TX,0} + (EVM_{TX,100} - EVM_{TX,0}) \times (L / 100\%),$$

wobei $EVM_{TX,0}$ und $EVM_{TX,100}$ für das zulässige EVM bei minimaler Last beziehungsweise maximaler Last stehen.

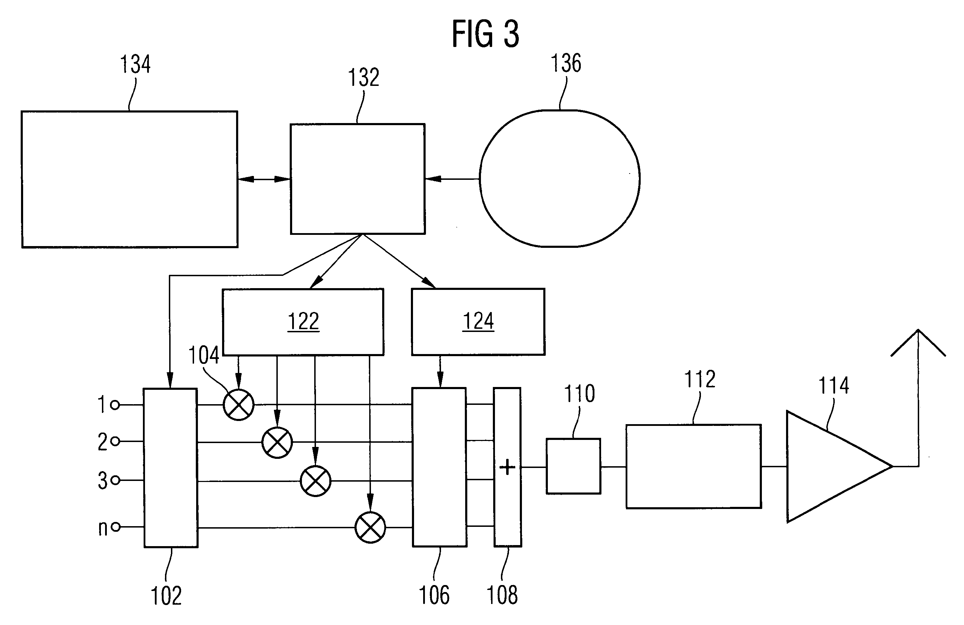

Die beschriebenen Optimierungsansätze zur Bestimmung der EVM - Werte sowie der Modulationsparameter, der Leistungsparameter und der Begrenzungsparameter können in der Fig. 3 gezeigten Überwachungseinheit 132 durchgeführt werden.

Detaillierte Beschreibung des zweiten Optimierungsansatzes Im Folgenden wird nun der zweite Optimierungsansatz nochmals detailliert erläutert. Unter der Annahme eines Senders (TX) mit Clipping kann ein bestimmter EVM und PAR beobachtet werden. EVM beschreibt das Verhältnis zwischen dem Fehler $S_E$ und der Signalamplitude $S_S$ am Senderausgang und kann anhand der entsprechenden Leistungswerte $P_E$ und $P_S$ wie folgt berechnet werden:

$$EVM = \sqrt{P_E / P_S} \ ,$$

wobei PAR das Peak ($P_P$) to Average ($P_S$) Ratio der TX-Signalleistung ist:

$$PAR = P_P / P_S$$

Beim Empfänger (RX) kommt das TX-Signal multipliziert mit der Übertragungskanaldämpfung A an. Das Verhältnis zwischen dieser ankommenden Signalleistung und der RX-Rausch- und Interferenzleistung $P_N$ von allen Quellen außer der entsprechenden TX-Quelle wird als Signal-Rausch-Abstand SNR bezeichnet.

$$SNR = A \cdot P_S / P_N$$

Angenommen, dass keine Korrelation zwischen Rauschquellen besteht, kann das Gesamt-RX-C/I anhand der folgenden Gleichung berechnet werden:

$$\frac{1}{C/I} = A \cdot P_E / (A \cdot P_S) + P_N / (A \cdot P_S) = EVM^2 + 1/SNR$$

Das Ziel ist nun eine Maximierung von C/I.

Aus der obigen Gleichung ist offensichtlich, dass für einen konstanten EVM eine maximale TX-Signalleistung $P_{S,max}$ das C/I maximiert. Wird die Tatsache vorausgesetzt, dass die Spitzenleistung auf einen Maximalwert $P_{P,max}$ begrenzt wird, definiert PAR die maximal erreichbare (durchschnittliche) TX-Signalleistung $P_{S,max}$.

$$P_{S,max} = P_{P,max} / PAR$$

Durch Einstellen des maximalen Peak-to-Noise-Ratio PNR am Empfänger auf

$$PNR = A \cdot P_{P,max} / P_N$$

wird folgendes erhalten:

$$\frac{1}{C/I \ (max)} =$$

$$EVM^2 + P_N / (A \cdot P_{S,max}) = EVM^2 + P_N / (A \cdot P_{P,max} / PAR) = EVM^2 +$$

$$PAR/PNR$$

Es werden nun zwei EVM-Quellen angenommen: eine konstante analoge Komponente $EVM_{anal}$ und eine Komponente $EVM_{clip}$, die vom aktuellen Clipping-Pegel abhängt. Da das PAR auch vom Clipping-Pegel abhängt, besteht eine Beziehung zwischen PAR und $EVM_{clip}$.

$$EVM^2 = EVM_{anal}^2 + EVM_{clip}^2$$

$$PAR = PAR(EVM_{clip})$$

Dies resultiert in einer Gleichung, in der C/I maximiert werden kann.

$$C/I(EVM) = \frac{1}{EVM_{anal}^2 + EVM_{clip}^2 + PAR(EVM_{clip})/PNR}$$

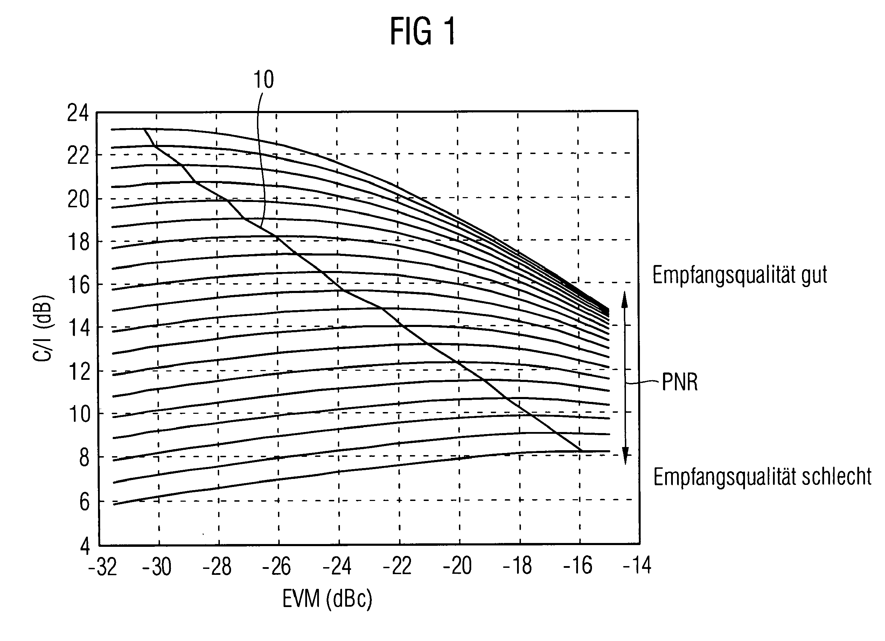

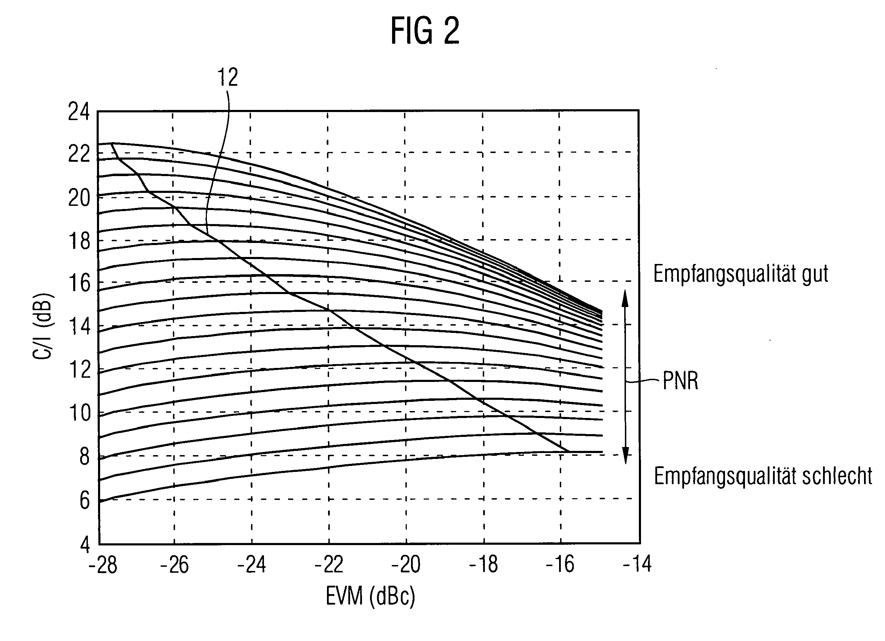

Simulationsergebnisse auf Basis der obigen Berechnungen sind in den Fig. 1 und 2 gezeigt.

Fig. 1 und 2 zeigt mehrere Kurven C/I(EVM), jede für einen bestimmten PNR-Wert. Diese Kurven wurden aus PAR = PAR($EVM_{clip}$) Simulationsergebnissen unter der Annahme berechnet, dass $EVM_{anal}$ = 2% (Fig. 1) bzw. 3,5% (Fig. 2) ist für jeden Clipping-Pegel.

Die abfallenden Linien 10 und 12 in Fig. 1 bzw. 2 verbindet die einzelnen Maxima der Kurven C/I(EVM) und kennzeichnet den optimalen Bereich. Ein EVM, das größer oder kleiner als der Wert der Linie 10 oder 12 ist, würde einen kleineres C/I für ein gegebenes PNR ergeben. Die C/I-Abweichung ist jedoch nicht groß innerhalb eines Bereichs von wenigen dB um das optimale EVM.

Nichtsdestotrotz machen EVM-Werte, die größer als das Optimum sind, keinen Sinn, solange ein höheres EVM mit einem geringeren PAR und mit einer höheren Leistung assoziiert ist. Eine höhere Leistung verbessert nicht nur nicht weiter das C/I, sondern es vergrößert auch Inter- (und Intra-) Zelleninterferenz und -strahlung. Daher stellt die Linie 10 bzw. 12 eine Empfehlung für das obere EVM-Limit für ein gegebenes C/I dar.

In dem Simulationsbeispiele für $EVM_{analog}$ = 2% ergibt sich das optimale Verhältnis zwischen C/I und EMV wie folgt:

$$EVM_{opt}\ [dBc]\ =\ -(C/I\ [dB]\ +8)$$

Das resultierende SNR-Erfordernis lautet:

$$SNR_{opt}[dB]\ =\ C/I[dB]\ +\ 0.75$$

Das Beispiel für $EVM_{anal}$ = 3.5% (Fig. 2) zeigt ein unterschiedliches Verhalten. Hier neigt der EVM dazu, größer im 2%-Fall (Fig. 1) zu sein, insbesondere für höhere C/I-Werte. Dies resultiert in einer größeren durchschnittlichen TX-Leistung und ein wenig härteren SNR-Anforderungen.

Ausführungsbeispiele verschiedener Vorrichtungen gemäß der Erfindung

Fig. 3 zeigt nun ein Blockschaltbild einer Vorrichtung zum Senden gemäß einem Ausführungsbeispiel der vorliegenden Erfindung. Insbesondere zeigt Fig. 3 eine Sendeeinrichtung mit störungsoptimierter Einstellung der mittleren Ausgangsleistung für jede einzelne Funkverbindung. Gezeigt ist dabei eine stark vereinfachte Prinzipdarstellung der erfindungsgemäßen Sendeeinrichtung. Insbesondere wurde auf Details im Hinblick auf das Filtern und Aufwärtsmischen sowie im Hinblick auf die Mehrfachzugriffsverfahren, beispielsweise Kanalspreizung oder IFFT, verzichtet. Solche Details können im Sinne der vorliegenden Erfindung unterschiedlich ausgeführt sein.

Die Vorrichtung zum Senden ist ausgebildet, um eine Mehrzahl von individuellen Basisbanddaten zu empfangen und zu verarbeiten. Gemäß diesem Ausführungsbeispiel ist die Vorrichtung ausgebildet, um Basisbanddaten von n Leitungen oder Links zu empfangen. Die Vorrichtung ist ferner ausgebildet, um die verarbeiteten Basisbanddaten in Form eines Sendesignals auszusenden. Das Sendesignal kann über einen Übertragungskanal, beispielsweise eine Funkverbindung übertragen werden und von einem Empfänger (nicht gezeigt in den Figuren) empfangen und ausgewertet werden.

Die Vorrichtung weist eine Modulations- und Kodiereinrichtung 102, eine Mehrzahl von Leistungsreglern 104, einen Begrenzer 106, einen Kombinierer 108, einen Digital-Analog-Wandler 110, einen Aufwärtsmischer 112 und einen Verstärker LPA 114 auf. Zudem weist die Vorrichtung eine Leistungssteuerung 122, eine Begrenzersteuerung 124 und eine Überwachungseinheit 132 auf, die mit einem Speicher 134 und einer Verwaltungseinheit 136 gekoppelt ist.

Die Modulationseinrichtung 102 ist ausgebildet, um die Basisbanddaten 1-n zu empfangen, zu modulieren und als Zwischenfrequenzsignale auszugeben. Ferner kann die Modulationseinrichtung 102 ausgebildet sein, um die Basisbanddaten zu kodieren. Die Modulationseinrichtung 102 ist ausgebildet, um Modulationsparameter und Codierparameter von der Überwachungseinheit 132 zu empfangen und die Basisbanddaten basierend auf den empfangenen Parametern zu kodieren.

Die Vorrichtung weist für jedes Zwischenfrequenzsignal einen Leistungsregler 104, also insgesamt n Leistungsregler 104 auf. Jeder Leistungsregler 104 ist ausgebildet, um eine Sendeleistung des zugehörigen Signals zu regeln. Dazu ist jeder Leistungsregler 104 ausgebildet, um von der Leistungssteuerung 122 einen oder eine Mehrzahl von Leistungsparameter zu empfangen, die einen Wert der Sendeleistung des zugehörigen Signals definieren. Die Leistungssteuerung 122 ist ausgebildet, um die Leistungsparameter an alle Leistungsregler 104 bereitzustellen. Die Leistungsparameter der unterschiedlichen Leistungsregler 104 können identisch oder aber unterschiedlich sein, das heißt individuell an jeden Unterträger angepasst sein. Die Leistungssteuerung 122 ist ausgebildet, um die Leistungsparameter von der Überwachungseinheit 132 zu empfangen. Alternativ kann die Leistungssteuerung 122 ausgebildet sein, um von der Überwachungseinheit 132 Werte zu empfangen, aus denen die Leistungssteuerung 122 die Leistungsparameter ermitteln kann.

Der Begrenzer 106 ist ausgebildet, um die Zwischenfrequenzsignale von den Leistungsreglern 104 zu empfangen und in ihrer Amplitude zu begrenzen. Dazu kann der Begrenzer 106 einen so genannten Clipping-Algorithmus aufweisen, der die Zwischenfrequenzsignale basierend auf Begrenzungsparametern begrenzt. Der Begrenzer 106 ist ausgebildet, um die Begrenzungsparameter von der Begrenzungsteuerung 124 zu empfangen. Die Begrenzungsteuerung 124 ist wiederum ausgebildet, um die Begrenzungsparameter von der Überwachungseinheit 132 zu empfangen. Alternativ kann die Begrenzungsteuerung 124 ausgebildet sein, um Werte von der Überwachungseinheit 132 zu empfangen, aus denen die Begrenzungsteuerung 124 wiederum die Begrenzungsparameter ermitteln kann. Die Begrenzungsparameter definieren wie stark die Zwischenfrequenzsignale begrenzt werden.

Der Kombinierer 108 ist ausgebildet, um die begrenzten Zwischenfrequenzsignale von dem Begrenzer 106 zu empfangen und zu einem Gesamtsignal zu kombinieren. Bei dem Kombinierer 108 kann es sich um ein Addierer handeln.

Der Digital-Analog-Wandler 110 ist ausgebildet, um das Gesamtsignal von dem Kombinierer 108 zu empfangen und digital-analog zu wandeln. Der Aufwärtsmischer 112 ist ausgebildet, um das digitalisierte Gesamtsignal von dem Digital-Analog-Wandler 110 zu empfangen, aufwärts zu mischen und an den Verstärker 114 bereitzustellen. Der Verstärker 114 ist ausgebildet, um das Sendesignal an eine Sendeantenne bereitzustellen, mittels der das Sendesignal ausgesendet werden kann.

Die Überwachungseinheit 132 kann als Radio-Ressourcen-Verwaltung bzw. Radio-Ressourcen-Steuerung ausgeführt sein. Die Überwachungseinheit 132 verfügt über einen Zugriff auf den Speicher 134 sowie auf die Verwaltungseinheit 136. Der Speicher 134 kann als Nachschlagetabelle LUT ausgeführt sein. In der Nachschlagetabelle kann ein Zusammenhang von PAR und EVM sowie die Werte für ein zugehöriges maximales C/I gespeichert sein, inklusive MCS, EVM(RCE) und PAR(PAPR). Außerdem kann die Tabelle entsprechende Parameter für den Clipping-Algorithmus des Begrenzers 106 enthalten. Die Verwaltungseinheit 136 kann wichtige Einflussfaktoren, wie Priorität, Auslastung der Funkzelle, den Empfangsbedingungen oder garantierte minimale Datenraten enthalten.

In Abhängigkeit von den Übertragungsfaktoren, die in dem Speicher 134 sowie der Verwaltungseinheit 136 gespeichert sind, kann die Überwachungseinheit 132 die optimalen Parameter für Modulation und Codierung, Sendeleistung und Begrenzung ermitteln. Dadurch kann ein Sendesignal erzeugt werden, das unter den gegebenen Bedingungen ein optimales C/I am Empfänger bewirkt und somit den Datendurchsatz bzw. die Reichweite der Vorrichtung zum Senden erhöht.

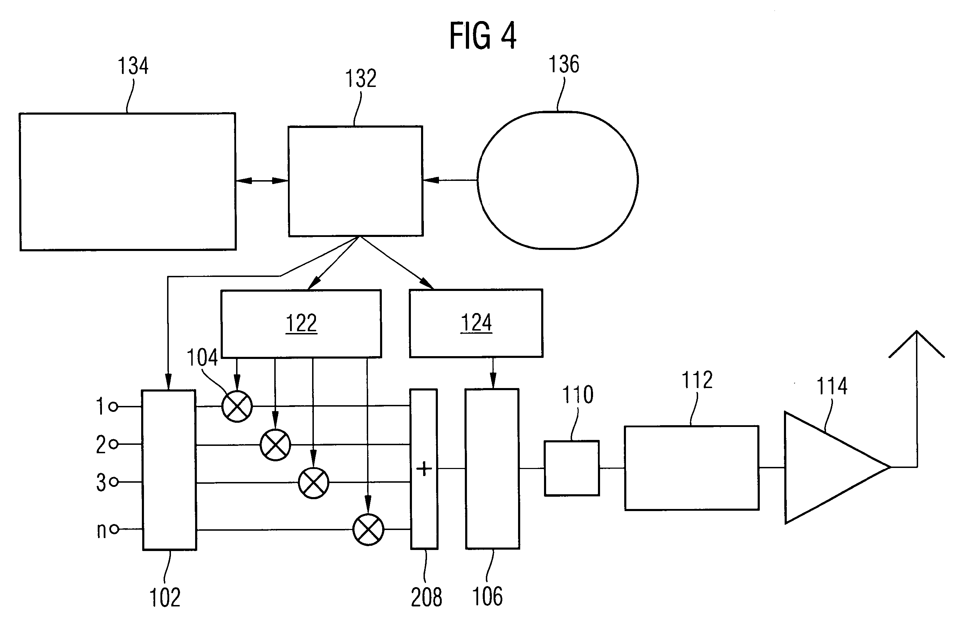

Fig. 4 zeigt ein Blockschaltbild einer Vorrichtung zum Senden gemäß einem weiteren Ausführungsbeispiel der vorliegenden Erfindung. Insbesondere zeigt Fig. 4 im Unterschied zu dem in Fig. 3 gezeigten Ausführungsbeispiel eine alternative Ausführungsform mit einer gemeinsamen Leistungsbegrenzung (Clipping).

Im Unterschied zu der in Fig. 3 gezeigten Vorrichtung zum Senden, ist bei der in Fig. 4 gezeigten Vorrichtung zum Senden ein Kombinierer 208 zwischen den Leistungsreglern 104 und dem Begrenzer 106 angeordnet. Der Kombinierer 208 kann wiederum als Summierer ausgeführt sein, der die einzelnen Zwischenfrequenzsignale von den Leistungsreglern 104 empfängt, diese kombiniert und als Gesamtsignal an den Begrenzer 106 bereitstellt. Gemäß diesem Ausführungsbeispiel ist der Begrenzer 106 ausgebildet, um das von dem Kombinierer 208 empfangen Gesamtsignal in seiner Amplitude zu begrenzen und an den Digital-Analog-Wandler 110 bereitzustellen.

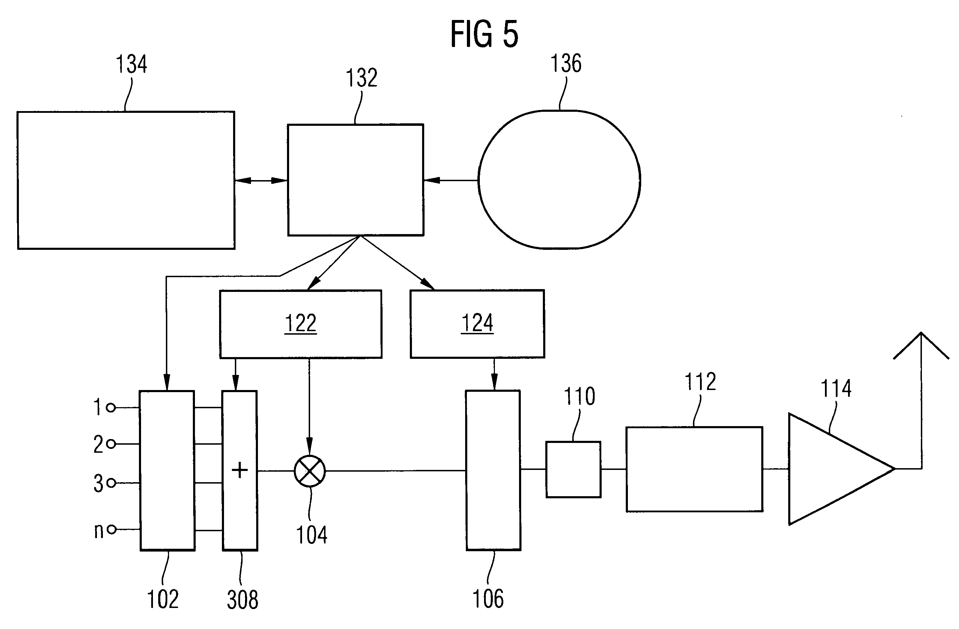

Fig. 5 zeigt ein Blockschaltbild einer Vorrichtung zum Senden gemäß einem weiteren Ausführungsbeispiel der vorliegenden Erfindung. Insbesondere zeigt Fig. 5 eine alternative Ausführungsform mit einer gemeinsamen Leistungsregelung und einer gemeinsamen Leistungsbegrenzung.

Im Unterschied zu der in Fig. 3 gezeigten Vorrichtung zum Senden, ist bei der im Fig. 5 gezeigten Vorrichtung zum Senden ein Kombinierer 308 zwischen der Modulationseinrichtung 102 und einem einzigen Leistungsregler 104 angeordnet. Der Kombinierer 308 kann wiederum als Addierer ausgeführt sein, der die von der Modulationseinrichtung 102 bereitgestellten Zwischenfrequenzsignale empfängt, kombiniert und als Gesamtsignal an den Leistungsregler 104 bereitstellen. Der Leistungsregler 104 ist ausgebildet, um die Sendeleistung des Gesamtsignals zu regeln bzw. einzustellen und das Gesamtsignal, dessen Sendeleistung geregelt bzw. eingestellt ist, an den Begrenzer 106 bereitzustellen.

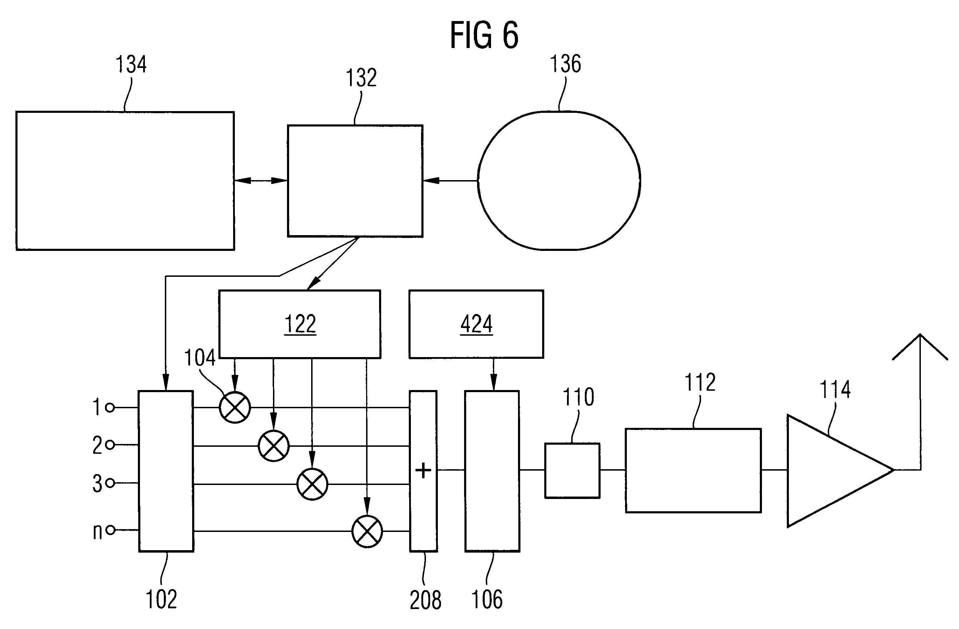

Fig. 6 zeigt ein Blockschaltbild einer Vorrichtung zum Senden gemäß einem weiteren Ausführungsbeispiel der vorliegenden Erfindung. Insbesondere zeigt Fig. 6 eine alternative Ausführungsform mit festen Begrenzungsparametern.

Im Unterschied zu der in Fig. 4 gezeigten Vorrichtung zum Senden werden die Begrenzungsparameter gemäß dem in Fig. 6 gezeigten Ausführungsbeispiel nicht von der Überwachungseinheit 132 an die Begrenzungssteuerung 124 bereitgestellt. Vielmehr weist die Begrenzungsteuerung 124 bereits entsprechende Begrenzungsparameter auf. Die Begrenzungsparameter können vordefiniert sein. Daher ist es auch nicht erforderlich, dass diese Begrenzungsparameter in dem Speicher 134 gespeichert sind, wie es bei den vorangegangenen Ausführungsbeispielen der Fall sein kann.

Die vorliegende Erfindung wurde an Hand von Mobilfunk-Sendesystemen beschrieben, ist jedoch nicht auf solche Systeme begrenzt. Vielmehr kann der erfindungsgemäße Ansatz für alle Übertragungssysteme eingesetzt werden, in denen eine Anpassung eines Signals basierend auf variablen Übertragungsbedingungen erwünscht ist.

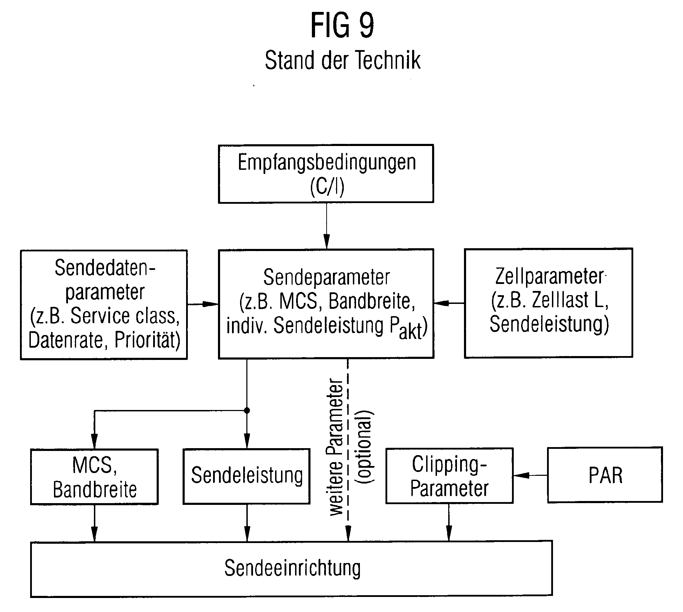

Fig. 9 zeigt anhand eines Flussdiagramms die Einstellung der Parameter MCS, Sendeleistung und Clipping-Parameter einer Mobilfunk-Sendeeinrichtung gemäß dem Stand der Technik. Darüberhinaus können noch weitere Sendeparameter einer Mobilfunk-Sendeeinrichtung eingestellt werden. Das MCS und die Sendeleistung werden in diesem Beispiel durch die Sendedatenparameter, z.B. die Service Class, Datenrate, Priorität bestimmt.

In die Einstellung der Parameter MCS, Bandbreite und Sendeleistung fließen ferner die Empfangsbedingungen in Form des Nutzsignal-Stör-Abstands C/I sowie Zellparameter einer Mobilfunkzelle wie die Zelllast L und die Sendeleistung in der Zelle ein. Wie in Fig. 9 erkennbar ist, werden die Clipping-Parameter unabhängig von den anderen Parametern aufgrund des gewählten PAR eingestellt.

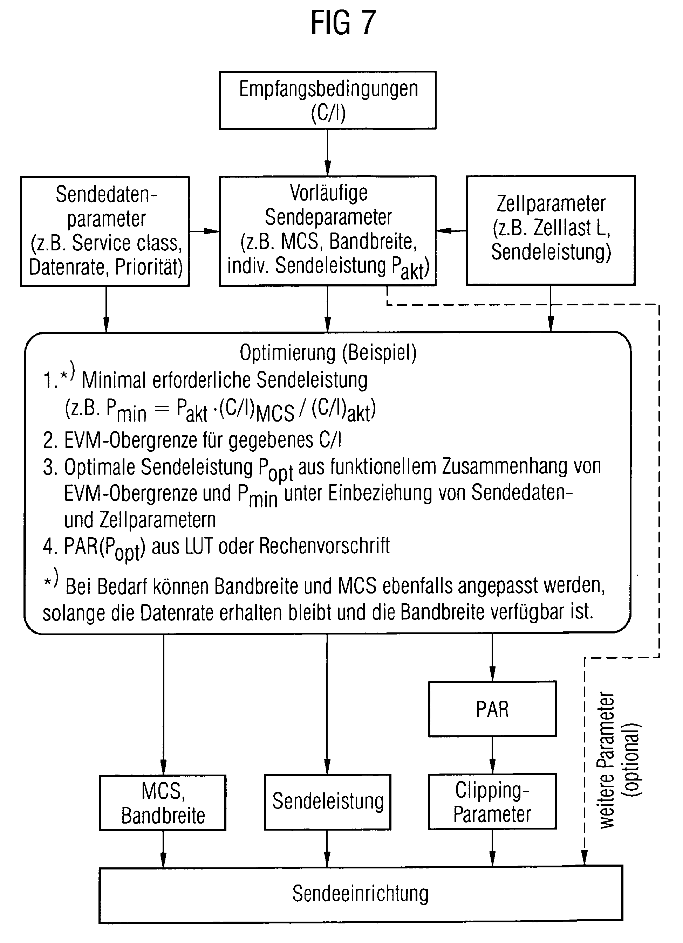

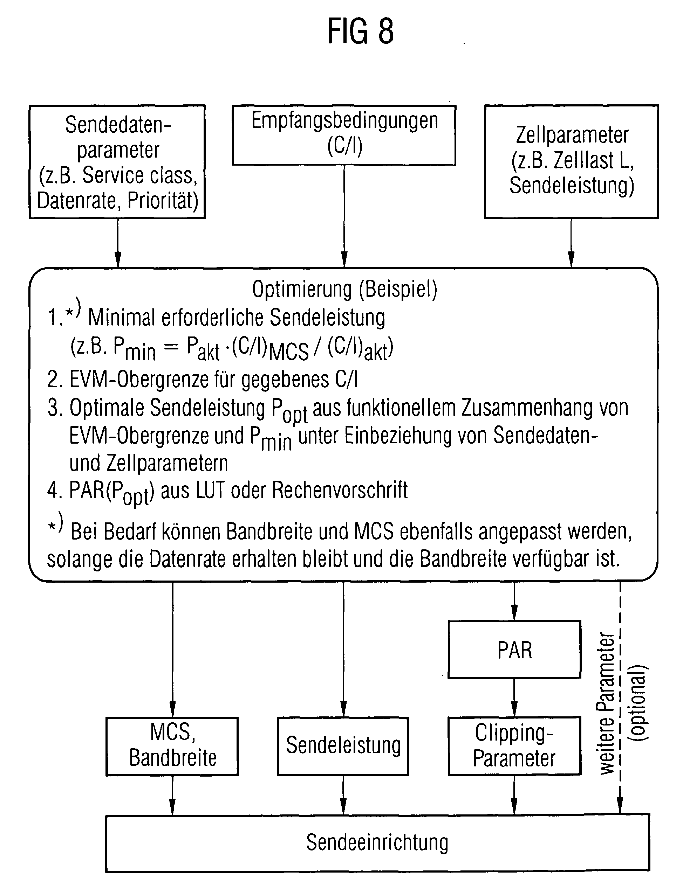

Im Unterschied hierzu zeigen die Fig. 7 und 8 Flussdiagramme, bei denen bei der Einstellung von Parametern einer Mobilfunk-Sendeeinrichtung eine Optimierung gemäß der Erfindung erfolgt. Die Optimierung läuft in beiden dargestellten Abläufen identisch ab, lediglich die Eingabeparameter für die Optimierung sind unterschiedlich.

Eine Optimierung läuft wie folgt ab:

1. Zunächst wird eine minimal erforderliche Sendeleistung $P_{min}$ ermittelt, z.B. $P_{min} = P_{akt} (C/I)_{MCS}/(C/I)_{akt}$, wobei $C/I)_{akt}$ das bei der die aktuelle Sendeleistung $P_{akt}$ gemessene C/I und $(C/I)_{MCS}$ das zum aktuellen MCS gehörige C/I ist. Bei Bedarf können auch die Bandbreite und das MCS angepasst werden, solange die Datenrate erhalten bleibt und die Bandbreite verfügbar ist.

2. Anschließend wird eine EVM-Obergrenze für ein gegebenes C/I bestimmt. Diese Obergrenze kann durch die Abhängigkeit der Kurven 10 und 12 in den Figuren 1 und 2 ermittelt werden.

3. Dann wird die optimale Sendeleistung $P_{opt}$ durch einen funktionellen Zusammenhang aus $P_{min}$ und der EVM-Obergrenze unter Einbeziehung von der maximalen verfügbaren Spitzensendeleistung $P_{P,max}$ sowie Sendedaten- und Zellparametern ermittelt. Diese Funktion kann auch in einer Tabelle abgespeichert sein.

4. Schließlich wird das PAR aus der optimalen Sendeleistung $P_{opt}$) anhand einer Look-Up-Tabelle (LUT) oder einer Rechenvorschrift bestimmt.

Durch die Optimierung ergeben sich die Paramter MCS, Bandbreite, Sendeleistung und PAR, die entsprechend in der Mobilfunk-Sendeeinrichtung eingestellt werden.

Anstelle des Parameters $P_{min}$ kann auch ein anderer Parameter verwendet werden, der den Einstellungen für eine minimale erforderliche Performance entspricht. Ebenso kann für die EVM-Obergrenze ein Parameter gewählt werden, der die Einstellungen für eine optimale Performance repräsentiert.

In einer weiteren Ausführungsmöglichkeit können die für das Clipping relevanten Parameter auch direkt ohne die Verwendung von $P_{opt}$ und/oder PAR berechnet werden.

Bezugszeichen

| | |
|---|---|
| 10, 12 | Linie zur Verbindung der Maxima der C/I(EVM) Simulationskurven |
| 102 | Modulator |
| 104 | Leistungsregler |
| 106 | Begrenzer |
| 108 | Kombinierer |
| 110 | Digital-analog-Wandler |
| 112 | Aufwärtsmischer |
| 114 | Sendeverstärker |
| 122 | Leistungssteuerung |
| 124 | Begrenzersteuerung |
| 132 | Überwachungseinheit |
| 134 | Speicher |
| 136 | Verwaltungseinheit |
| 208 | Kombinierer |
| 208 | Kombinierer |
| 424 | Begrenzersteuerung |

**Patentansprüche**

**1.** Verfahren zum Senden eines Sendesignals, insbesondere eines Mobilfunksignals, an einen Empfänger, bei dem

das Sendesignal gemäß einem Modulations-Codierungs-Schema MCS verarbeitet und einer Amplitudenbegrenzung zum Erzielen eines vorgegebenen Verhältnisses von maximaler zu mittlerer Sendeleistung PAR unterzogen wird, und bei dem ein Grenzwert EVM für einen Fehler des Sendesignals bedarfsgerecht an Übertragungsbedingungen für das Sendesignal derart angepasst wird, dass ein maximaler Nutzsignal-Stör-Abstand C/I an einem Empfänger erzielt wird.

2. Verfahren nach Anspruch 1,
   **dadurch gekennzeichnet, dass**
   eine Übertragungsbedingung eine minimale Sendeleistung bei fest vorgegebenem Nutzsignal-Stör-Abstand C/I an einem Empfänger ist, und der Grenzwert EVM für einen Fehler des Sendesignals auf nahezu Null eingestellt wird.

3. Verfahren nach Anspruch 1,
   **dadurch gekennzeichnet, dass**
   eine Übertragungsbedingung ein zu maximierender Nutzsignal-Stör-Abstand C/I am Empfänger bei einem fest vorgegebenem Spitzenwert-Rausch-Abstand PNR ist und der optimale Grenzwert für einen Fehler des Sendesignals EVM wie folgt ermittelt wird:

   a) Ermitteln der Abhängigkeit des Fehlers des Sendesignals EVM vom vorgegebenen Verhältnis von maximaler zu mittlerer Sendeleistung PAR beim Sender,
   b) Bestimmen des maximalen Nutzsignal-Stör-Abstands C/I am Empfänger und des dazugehörigen Fehlers des Sendesignals $EVM^2$ für einen beliebigen, festen Wert des Spitzenwert-Rausch-Abstands $PNR_{RX}$ am Empfänger,
   c) Zuordnen des aus der Optimierung in b) erhaltenen Fehlers des Sendesignals $EVM^2$ als Grenzwert zum maximalen Nutzsignal-Stör-Abstand C/I am Empfänger , und
   d) Wiederholen der Schritte b) und c) für verschiedene Werte des Spitzenwert-Rausch-Abstands $PNR_{RX}$.

4. Verfahren nach Anspruch 1,
   **dadurch gekennzeichnet, dass**
   die Auslastung einer Funkzelle mit einem Parameter Load L=0% ... 100% abgeschätzt wird, um entsprechende Maßnahmen für eine Zugangssteuerung, eine Überlaststeuerung oder eine Ablaufsteuerung zu entscheiden, und der Parameter Load verwendet wird, um den Grenzwert für einen Fehler $EVM_{TX}$ des Senders vorzugeben.

5. Verfahren nach Anspruch 4,
   **dadurch gekennzeichnet, dass**
   der Grenzwert für einen Fehler $EVM_{TX}$ des Senders sich gemäß der Formel

$$EVM_{TX} = EVM_{TX,0} + (EVM_{TX,100} - EVM_{TX,0}) \times (L / 100\%),$$

   ergibt, wobei $EVM_{TX,0}$ und $EVM_{TX,100}$ für das zulässige EVM bei minimaler Last beziehungsweise maximaler Last stehen.

6. Vorrichtung zum Senden eines Sendesignals, insbesondere eines Mobilfunksignals, an einen Empfänger, umfassend

   - einen Leistungsregler (104) zum Regeln einer Sendeleistung eines Zwischenfrequenzsignals abhängig von einem Leistungsparameter;
   - einen Begrenzer (106) zum Begrenzen der Sendeleistung des Zwischenfrequenzsignals abhängig von einem Begrenzungsparameter, wobei aus dem Zwischenfrequenzsignal das Sendesignal erzeugbar ist;
   - eine Überwachungseinheit (132), die ausgebildet ist, um gemäß einer Optimierungsvorschrift einen Grenzwert (EVM) für einen Fehler des Sendesignals abhängig von Übertragungsfaktoren zu bestimmen und aus dem Grenzwert zumindest den Leistungsparameter so zu bestimmen, dass das Sendesignal an den Grenzwert angepasst ist.

7. Vorrichtung gemäß Anspruch 6,
   **dadurch gekennzeichnet, dass**

die Überwachungseinheit (132) ausgebildet ist, um neben dem Leistungsparameter auch den Begrenzungsparameter so zu bestimmen, dass das Sendesignal an den Grenzwert angepasst ist.

8. Vorrichtung gemäß einem der Ansprüche 6 oder 7,
   **dadurch gekennzeichnet, dass**
   die Vorrichtung zum Senden ferner einen Modulator (102) aufweist, der ausgebildet ist, um ein Basisbandsignal abhängig von einem Modulationsparameter zu modulieren und als das Zwischenfrequenzsignal bereitzustellen, wobei die Überwachungseinheit (132) ferner ausgebildet ist, um den Modulationsparameter aus dem Grenzwert (EVM) zu bestimmen.

9. Vorrichtung gemäß einem der Ansprüche 6 bis 8,
   **dadurch gekennzeichnet, dass**
   die Vorrichtung ferner einen Digital-Analog-Wandler (110), einen Aufwärtsmischer (112) und einen Sendeverstärker (114) aufweist, um das Sendesignal aus dem Zwischenfrequenzsignal zu erzeugen.

10. Vorrichtung gemäß einem der Ansprüche 6 bis 9,
    **dadurch gekennzeichnet, dass**
    die Optimierungsvorschrift darauf basiert, dass sich eine relative Fehlerenergie an dem Empfänger aus der Formel

$$1/(C/I)_{min} > 1/(C/I) = 1/SNR_{RX} + EVM_{TX}^{2}$$

$(C/I)_{min}$: mindestens erforderlicher Nutzsignal-Stör-Abstand
$C/I$ : Nutzsignal-Stör-Abstand
$SNR_{RX}$ : Signal-Rausch-Abstand am Empfänger
$EVM_{TX}$ : Grenzwert in der Vorrichtung zum Senden

ergibt und dass der Signal-Rausch-Abstand am Empfänger für Fehler, die nicht von der Vorrichtung zum Senden stammen, direkt mit einer mittleren Sendeleistung des Sendesignals skaliert.

11. Vorrichtung gemäß einem der Ansprüche 6 bis 10,
    **dadurch gekennzeichnet, dass**
    die mittlere Sendeleistung des Sendesignals einer der Übertragungsfaktoren ist, und die Optimierungsvorschrift eine Reduzierung des Grenzwerts EVM bei einer Reduzierung der mittleren Sendeleistung und eine Erhöhung des Grenzwerts bei einer Erhöhung der mittleren Sendeleistung bewirkt.

12. Vorrichtung gemäß Anspruch 11,
    **dadurch gekennzeichnet, dass**
    der Grenzwert EVM gemäß der Optimierungsvorschrift zum Erreichen einer minimalen Sendeleistung des Sendesignals bei einem vorgegebenen Nutzsignal-Stör-Abstand gemäß den Formeln

$$EVM_{TX} = EVM_{Analog},$$

und

$$1/(C/I) = 1/SNR_{RX} + EVM_{Analog}^{2}$$

$EVM_{TX}$ : Grenzwert der Vorrichtung zum Senden
$EVM_{Analog}$ : Grenzwert in einem Analogteil der Vorrichtung zum Senden
$C/I$ : Nutzsignal-Stör-Abstand
$SNR_{RX}$ : Signal-Rausch-Abstand am Empfänger

bestimmbar ist.

13. Vorrichtung gemäß Anspruch 11,
    **dadurch gekennzeichnet, dass**
    der Grenzwert EVM gemäß der Optimierungsvorschrift zum Erreichen eines maximalen Nutzsignal-Stör-Abstands bei einem vorgegebenen Spitzen-Rausch-Abstand gemäß der Formel

$$1/(C/I) = 1/SNR_{RX} + EVM^2 = PAR_{TX}/PNR_{RX} + EVM_{TX}^2$$

C/I : Nutzsignal-Stör-Abstands
$SNR_{RX}$ : Signal-Rausch-Abstand am Empfänger
$EVM_{TX}$ : Grenzwert in der Vorrichtung zum Senden
$PAR_{TX}$ : Verhältnis von maximaler zu mittlerer Sendeleistung
$PNR_{RX}$ : Spitzen-Rausch-Abstand am Empfänger

bestimmbar ist.

14. Vorrichtung gemäß Anspruch 12,
    **dadurch gekennzeichnet, dass**
    die Überwachungseinheit (132) zum Bestimmen einer Abhängigkeit des Quadrats des Grenzwertes $EVM^2$ von einem erforderlichen Nutzsignal-Stör-Abstand C/I ausgebildet ist, um in einem ersten Schritt eine Abhängigkeit des Quadrats des Grenzwertes von einem Verhältnis von maximaler zu mittlerer Sendeleistung $EVM^2$ (PAR) bei der Vorrichtung zum Senden zu ermitteln, in einem zweiten Schritt einen maximalen Nutzsignal-Stör-Abstand C/I für einen vorgegebenen Spitzen-Rausch-Abstand-Wert am Empfänger $PNR_{RX}$-Wert zu bestimmen, in einem dritten Schritt das Quadrat des Grenzwertes zum Signal-Rausch-Abstand aus der Bestimmung im zweiten Schritt zuzuordnen und in einem vierten Schritt den zweiten und dritten Schritt für verschiedene Spitzen-Rausch-Abstand-Werte am Empfänger zu wiederholen.

15. Vorrichtung gemäß einem der Ansprüche 6 bis 14,
    **dadurch gekennzeichnet, dass**
    die Überwachungseinheit (132) mit einem Speicher (134) gekoppelt ist, wobei der Speicher einen Zusammenhang zwischen einem Verhältnis von maximaler zu mittlere Sendeleistung PAR und dem Grenzwert für den maximal zulässigen Fehler des Sendesignals EVM sowie Werte für einen zugehörigen maximalen Nutzsignal-Stör-Abstand C/I aufweist.

16. Vorrichtung gemäß Anspruch 11,
    **dadurch gekennzeichnet, dass**
    der Speicher (134) ferner Begrenzungsparameter zum Bereitstellen an den Begrenzer (106) aufweist.

17. Vorrichtung gemäß einem der Ansprüche 6 bis 16,
    **dadurch gekennzeichnet, dass**
    die Vorrichtung eine Verwaltungseinheit (136) zur Abschätzung einer Auslastung einer Funkzelle, in der die Vorrichtung zum Senden angeordnet ist, aufweist, wobei die Auslastung ein Übertragungsfaktor ist und die Verwaltungseinheit (136) ausgebildet ist, um die Auslastung und die Überwachungseinheit (132) bereitzustellen.

18. Vorrichtung gemäß Anspruch 17,
    **dadurch gekennzeichnet, dass**
    der Grenzwert unter Einbeziehung der Formel

$$EVM_{TX} = EVM_{TX,0} + (EVM_{TX,100} - EVM_{TX,0}) \times (L / 100\%),$$

$EVM_{TX}$: Grenzwert an der Vorrichtung zum Senden
$EVM_{TX,0}$: zulässiger Grenzwert bei minimaler Last

EVM$_{TX,100}$: zulässiger Grenzwert bei maximaler Last
L : Auslastung der Funkzelle

bestimmbar ist.

**19.** Vorrichtung gemäß einem der Ansprüche 8 bis 18,
**dadurch gekennzeichnet, dass**
der Modulator (102) ausgebildet ist, um eine Mehrzahl von Basisbandsignalen abhängig von einer Mehrzahl von Modulationsparametern zu modulieren und als eine Mehrzahl von Zwischenfrequenzsignalen bereitzustellen, wobei die Überwachungseinheit (132) ferner ausgebildet ist, um die Mehrzahl von Modulationsparametern aus dem Grenzwert (EVM) zu bestimmen.

**20.** Vorrichtung gemäß Anspruch 19,
**dadurch gekennzeichnet, dass**
die Vorrichtung einen Kombinierer (308) aufweist, der ausgebildet ist, um die Mehrzahl von Zwischenfrequenzsignalen zu kombinieren und als Zwischenfrequenzsignal an den Leistungsregler (104) bereitzustellen.

**21.** Vorrichtung gemäß Anspruch 19,
**dadurch gekennzeichnet, dass**
die Vorrichtung zum Senden eine Mehrzahl von Leistungsreglern zum Regeln jeweils einer Sendeleistung der Mehrzahl von Zwischenfrequenzsignalen abhängig von einer Mehrzahl von Leistungsparametern aufweist, wobei die Überwachungseinheit (132) ausgebildet ist, um aus dem Grenzwert die Mehrzahl von Leistungsparametern zu bestimmen.

**22.** Vorrichtung gemäß Anspruch 21,
**dadurch gekennzeichnet, dass**
die Vorrichtung einen Kombinierer (208) aufweist, der ausgebildet ist, um die Mehrzahl von Zwischenfrequenzsignalen zu kombinieren und als das Zwischenfrequenzsignal an den Begrenzer (106) bereitzustellen.

**23.** Vorrichtung gemäß Anspruch 22,
**dadurch gekennzeichnet, dass**
der Begrenzer (106) einen vordefinierten Begrenzungsparameter aufweist.

**24.** Vorrichtung gemäß Anspruch 23,
**dadurch gekennzeichnet, dass**
der Begrenzer (106) ausgebildet ist, um jeweils eine Sendeleistung der Mehrzahl von Zwischenfrequenzsignalen abhängig von einer Mehrzahl von Begrenzungsparametern zu begrenzen und eine Mehrzahl von Sendesignalen bereitzustellen.

# FIG 1

Empfangsqualität gut

PNR

Empfangsqualität schlecht

EP 1 953 979 A1

# FIG 2

EP 1 953 979 A1

FIG 3

FIG 4

FIG 5

EP 1 953 979 A1

FIG 6

# FIG 7

Empfangsbedingungen
(C/I)

Sendedatenparameter
(z.B. Service class,
Datenrate, Priorität)

Vorläufige
Sendeparameter
(z.B. MCS, Bandbreite,
indiv. Sendeleistung $P_{akt}$)

Zellparameter
(z.B. Zelllast L,
Sendeleistung)

Optimierung (Beispiel)

1.[*] Minimal erforderliche Sendeleistung

(z.B. $P_{min} = P_{akt} \cdot (C/I)_{MCS} / (C/I)_{akt}$)

2. EVM-Obergrenze für gegebenes C/I

3. Optimale Sendeleistung $P_{opt}$ aus funktionellem Zusammenhang von
EVM-Obergrenze und $P_{min}$ unter Einbeziehung von Sendedaten-
und Zellparametern

4. PAR($P_{opt}$) aus LUT oder Rechenvorschrift

[*] Bei Bedarf können Bandbreite und MCS ebenfalls angepasst werden,
solange die Datenrate erhalten bleibt und die Bandbreite verfügbar ist.

PAR

MCS,
Bandbreite

Sendeleistung

Clipping-
Parameter

weitere Parameter
(optional)

Sendeeinrichtung

# FIG 8

Sendedatenparameter
(z.B. Service class,
Datenrate, Priorität)

Empfangsbedingungen
(C/I)

Zellparameter
(z.B. Zelllast L,
Sendeleistung)

Optimierung (Beispiel)

1.*) Minimal erforderliche Sendeleistung

(z.B. $P_{min} = P_{akt} \cdot (C/I)_{MCS} / (C/I)_{akt}$)

2. EVM-Obergrenze für gegebenes C/I

3. Optimale Sendeleistung $P_{opt}$ aus funktionellem Zusammenhang von EVM-Obergrenze und $P_{min}$ unter Einbeziehung von Sendedaten- und Zellparametern

4. PAR($P_{opt}$) aus LUT oder Rechenvorschrift

*) Bei Bedarf können Bandbreite und MCS ebenfalls angepasst werden, solange die Datenrate erhalten bleibt und die Bandbreite verfügbar ist.

PAR

weitere Parameter
(optional)

MCS,
Bandbreite

Sendeleistung

Clipping-
Parameter

Sendeeinrichtung

# FIG 9
## Stand der Technik

```
                    ┌─────────────────────────┐
                    │  Empfangsbedingungen    │
                    │          (C/I)          │
                    └─────────────────────────┘
                                 │
                                 ▼
┌──────────────────┐   ┌─────────────────────────┐   ┌──────────────────┐
│  Sendedaten-     │   │     Sendeparameter      │   │  Zellparameter   │
│  parameter       │──▶│   (z.B. MCS, Bandbreite,│◀──│  (z.B. Zelllast L,│
│ (z.B. Service    │   │ indiv. Sendeleistung Pakt)│  │  Sendeleistung)  │
│  class,          │   └─────────────────────────┘   └──────────────────┘
│ Datenrate,       │
│  Priorität)      │
└──────────────────┘
```

MCS, Bandbreite | Sendeleistung | weitere Parameter (optional) | Clipping-Parameter | PAR

Sendeeinrichtung

**Europäisches Patentamt**

## EUROPÄISCHER TEILRECHERCHENBERICHT
der nach Regel 45 des Europäischen Patentübereinkommens für das weitere Verfahren als
europäischer Recherchenbericht gilt

**Nummer der Anmeldung**

EP 07 00 2016

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| A | WO 2004/006464 A (INTEL CORP [US]) 15. Januar 2004 (2004-01-15) <br><br> * page 2, last paragraph - page 3, first paragraph * <br> ----- | 1,3-7, 9-18, 20-24 | INV. H04L27/26 |
| A | US 6 038 261 A (MESTDAGH DENIS J G [FR]) 14. März 2000 (2000-03-14) <br><br> * Spalte 2, Zeile 25 - Zeile 35 * <br> ----- | 1,3-7, 9-18, 20-24 | |

**RECHERCHIERTE SACHGEBIETE (IPC)**

H04L

### UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 26. Juni 2007 | Baltersee, Jens |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C09)

**Europäisches Patentamt**

**UNVOLLSTÄNDIGE RECHERCHE ERGÄNZUNGSBLATT C**

Nummer der Anmeldung

EP 07 00 2016

Unvollständig recherchierte Ansprüche:
1, 3-7, 9-18, 20-24

Nicht recherchierte Ansprüche:
2, 8, 19

Grund für die Beschränkung der Recherche:

1.1 Laut der Beschreibung besteht der wesentliche Gedanke der Erfindung darin, dass eine Reduzierung des Verhältnisses von maximaler zu mittlerer Sendeleistung (PAR) zwei gegensätzliche Effekte (Erhöhung der durschnittlichen Sendeleistung vs Erhöhung von Störleistungen) auf das Gesamt-C/I auf der Empfängerseite hat und das diese gegensätlichen Effekte für eine Optimierung zur Anpasung eines Grenzwertes für einen Fehler des Sendesignals genutzt werden (siehe Seite 3, Zeile 16 - Seite 4, Zeile 15).

Gemäss des ersten Optimierungsansatzes, der in der Beschreibung auf Seite 15, Zeile 27 - Seite 16, Zeile 12 beschrieben wird, soll bei einem festen C/I die Sendeleistung minimiert werden. Allerdings wird nicht offenbart, wie eine solche Optimierung durchzuführen ist. Es wird lediglich der Grenzfall offenbart, wenn das Clipping vollkommen ausgeschaltet ist. Es scheint also, dass der erste Optimierungsansatz nicht ausreichend offenbart ist (Artikel 83 EPÜ). Für diesen Optimierungsansatz lässt sich folglich keine sinnvolle Recherche durchführen (Regel 45 EPÜ).

Der zweite Optimierungsansatz, der in der Beschreibung auf Seite 16, Zeile 14 - Seite 17, Zeile 30 und Seite 19, Zeile 1 - Seite 22 Zeile 12 offenbart wird, entspricht dem wesentlichen Gedanken der Erfindung, wie auf Seite 3, Zeile 16 - Seite 4, Zeile 15 beschrieben. Laut Beschreibung basiert dieser zweite Optimierungsansatz auf einem Verfahren, bei dem die Schritte auf Seite 16, Zeile 29 - Seite 17, Zeile 7 ausgeführt werden. Zumindest Schritte (a) - (c) wie auch eine Definition von EVM, PAR, C/I und PNR erscheinen wesentlich für die Erfindung, da der gewünschte technische Effekt, nämlich die Maximierung des Nutzsignal-Stör-Abstands, ohne diese Merkmale nicht erreicht wird.

Der dritte Optimierungsansatz, der in der Beschreibung auf Seite 18 beschrieben wird, ist eine Verfeinerung des zweiten Optimierungsansatzes. Im dritten Optimierungsansatz wird die Auslastung L einer Funkzelle bei der Berechnung des Fehlers EVM zusätzlich berücksichtigt.

Der unabhängige Anspruch 1 beansprucht eine Amplitudenbegrenzung zum Erzielen eines vorgegebenen Verhältnisses von maximaler zu mittlerer Sendeleistung (PAR). Gemäss der Ausführungsbeispiele (siehe, z.B. Seite 16, Zeile 23 - Seite 17, Zeile 9) soll der Nutzsignal-Stör-Abstand (C/I) bei festem Spitzenwert-zu-Rausch-Verhältnis (PNR) maximal werden. Da das Empfängerrauschen nicht beinflusst werden kann, bedeutet ein festes PNR auch eine feste maximale Sendeleistung. Das heisst, das bei der Maximierung das PAR und der Fehler EVM in Abhängigkeit der mittleren Sendeleistung so eingestellt werden, dass der C/I maximal wird. Mit anderen Worten, das PAR wird nicht vorgegeben, sondern ist ein Ergebnis der Maximierung. Somit ist der unabhängige Anspruch 1 nicht aussreichend durch die Beschreibung gestützt (Artikel 84 EPÜ)

Europäisches
Patentamt

UNVOLLSTÄNDIGE RECHERCHE
ERGÄNZUNGSBLATT C

Nummer der Anmeldung

EP 07 00 2016

Desweiteren beansprucht der unabhängige Vorrichtungsanspruch 6 eine Vorrichtung mit einer Überwachungseinheit, die ausgebildet ist, um gemäss einer Optimierungsvorschrift einen Grenzwert für einen Fehler des Sendesignals abhängig von Übertragungsfaktoren zu bestimmen und aus dem Grenzwert zumindest den Leistungsparameter so zu bestimmen, dass das Sendesignal an den Grenzwert angepasst ist. Bezüglich der in Anspruch 6 erwähnten Übertragunsfaktorn offenbart die Beschreibung Priorität eines Kanals, Auslastung einer Funkzelle, Empfangsbedingungen oder garantierte minimale Datenraten (siehe z.B. Seite 3, Zeile 31 - Seite 4, Zeile 2). Wie die Optimierung diese Übertragungsfaktoren berücksichtigt ist jedoch lediglich für die Auslastung einer Funkzelle offenbart. Ausserdem scheint die Berücksichtigung von anderen Übertragungsfaktoren als der Auslastung nicht eine offensichtliche Abwandlung der offenbarten Ausführungsbeispiele zu sein. Es scheint also, dass der Anspruch 6 nicht von der Beschreibung gestütz ist (Artikel 84 EPÜ) und die Beschreibung nicht ausreicht, um den Anspruch 6 in seiner vollen Breite ausführen zu können (Artikel 83 EPÜ). Desweiteren fehlen in Anspruch 6 die Merkmale, die als wesentlich für die Erfindung identifiziert wurden (die Schritte (a) - (c) wie oben ausgeführt) (Artikel 84 EPÜ).

Aus diesen Gründen beschränkt sich der Recherchenbericht auf die Ausführungbeispiele für den zweiten und dritten Optimierungsansatz.

1.2 Der abhängige Anspruch 2 beansprucht das minimieren der Sendeleistung bei fest vorgegebenen C/I. Dieses Merkmal steht in Widerspruch zu Anspruch 1, der das maximieren des C/I beansprucht. Der beabsichtige Schutzumfang von Anspruch 2 ist deshalb vollkommen unklar (Artikel 84 EPÜ). Aus diesem Grund wurde der Gegenstand von Anspruch 2 nicht recherchiert.

1.4 Gemäss der Ansprüche 8 und 19 wird ein Modulationsparameter aus dem Grenzwert bestimmt. Die Beschreibung offenbart jedoch nicht wie sich der Modulationsparameter aus dem Grenzwert bestimmen lässt. Ansprüche 8 und 19 sind folglich nicht von der Beschreibung gestützt (Artikel 84 EPÜ) und die Ansprüche lassen sich nicht in ihrer Breite ausführen (Artikel 83 EPÜ). Aus diesem Grund wurde der Gegenstand der Ansprüche 8 und 19 nicht recherchiert.

**ANHANG ZUM EUROPÄISCHEN RECHERCHENBERICHT**
**ÜBER DIE EUROPÄISCHE PATENTANMELDUNG NR.**

EP 07 00 2016

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2007

| Im Recherchenbericht angeführtes Patentdokument | Datum der Veröffentlichung | Mitglied(er) der Patentfamilie | Datum der Veröffentlichung |
|---|---|---|---|
| WO 2004006464 A | 15-01-2004 | AU 2003245670 A1<br>CN 1666437 A<br>EP 1522153 A1<br>TW 242344 B<br>US 2005135503 A1<br>US 2004005014 A1 | 23-01-2004<br>07-09-2005<br>13-04-2005<br>21-10-2005<br>23-06-2005<br>08-01-2004 |
| US 6038261 A | 14-03-2000 | AU 5770598 A<br>CA 2276332 A1<br>DE 69733768 D1<br>DE 69733768 T2<br>EP 0950306 A1<br>FR 2758030 A1<br>WO 9829996 A1<br>JP 3278850 B2<br>JP 2000516431 T | 31-07-1998<br>09-07-1998<br>25-08-2005<br>01-06-2006<br>20-10-1999<br>03-07-1998<br>09-07-1998<br>30-04-2002<br>05-12-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10219318 A1